# EUROPEAN PATENT APPLICATION

(11) **EP 4 822 154 A1**
(43) Date of publication of application: **14.10.2026**
(21) Application number: 26159970.8
(22) Date of filing: 23.02.2026
(51) Int. Cl.: F02B 23/06, F02P 15/08, F02B 23/08, F02B 23/10

(54) **SPARK IGNITION ENGINE AND METHOD FOR OPERATING SPARK IGNITION ENGINE**

(30) Priority: 14.03.2025 JP 2025041350
(71) Applicant: MAZDA MOTOR CORPORATION, Hiroshima 730-8670 (JP)
(72) Inventor: SHINYA, Iida, Aki-gun, Hiroshima (JP); RYOHEI, Ono, Aki-gun, Hiroshima (JP)
(74) Representative: Müller-Boré & Partner Patentanwälte PartG mbB

(57) **Abstract**

A spark ignition engine 1 includes a first ignition plug 31 and a second ignition plug 32, each of which is attached to an engine body 10 and forcibly ignites air-fuel mixture in a cylinder 11 during a compression stroke or an expansion stroke. The first ignition plug and the second ignition plug are spaced apart in a predetermined direction. With ascent of a piston 5 during the compression stroke, two vortex flows of the air-fuel mixture are formed in alignment in the predetermined direction with a center of the cylinder being interposed therebetween and in opposite directions from each other. The first ignition plug and the second ignition plug forcibly ignite the air-fuel mixture before the compression top dead center.

## Description

### [Technical Field]

The present invention relates to a spark ignition engine and a method for operating a spark ignition engine.

### [Background Art]

Patent Literature 1 discloses a conventional spark ignition engine. A Conventional spark ignition engine is an engine that is operated by so-called spark controlled compression ignition (SPCCI) combustion. The SPCCI combustion is a combustion form in which spark ignition (SI) combustion and compression ignition (CI) combustion are combined.

In the SPCCI combustion, an ignition plug forcibly ignites air-fuel mixture in a cylinder to initiate combustion by flame propagation, that is, the SI combustion. Due to heat generation by the SI combustion and a pressure increase in the cylinder caused by the flame propagation, the unburned air-fuel mixture undergoes compressed self-ignition, and thereafter, both the SI combustion and the CI combustion progress to terminate the combustion. The SPCCI combustion is immediately terminated after initiation of the CI combustion, and thus improves thermal efficiency of the engine.

### [Citation List]

### [Patent Literature]

[Patent Literature 1] Japanese Patent No. 7,139,962

### [Summary]

### [Technical Problem]

Further improvement in the thermal efficiency of the engine is requested. One of the means for improving the thermal efficiency of the engine is to increase an amount of EGR gas that is recirculated into the cylinder. The increase in the amount of the EGR gas (1) increases the specific heat ratio by diluting the air-fuel mixture, (2) suppresses wall surface heat transfer by reducing a combustion temperature (that is, reducing cooling loss), and (3) reduces a pressure difference between intake and exhaust strokes (that is, reducing pump loss). The increase in the amount of the EGR gas contributes to the improvement in the thermal efficiency of the engine by the three factors (1) to (3).

Meanwhile, when the amount of the EGR gas that is recirculated into the cylinder is large, combustion stability is degraded. The conventional engines, which include the engine operated by the SPCCI combustion, can recirculate the EGR gas only within a range that does not impair combustion stability.

The present invention disclosed herein ensures combustion stability even when a large amount of EGR gas is recirculated into a cylinder.

### [Solution to Problem]

The present invention provides a spark ignition engine as defined in claim 1.

For example, the spark ignition engine includes:
an engine body that has a cylinder extending in a first direction;
a piston that reciprocates in the first direction in the cylinder;
an intake port that communicates with inside of the cylinder, and causes intake air at least containing air to flow into the cylinder when being opened at least in an intake stroke;
an exhaust port that communicates with the inside of the cylinder in a manner to oppose the intake port in a second direction orthogonal to the first direction, and discharges exhaust gas from the inside of the cylinder when being opened at least in an exhaust stroke; and
a first ignition plug and a second ignition plug, each of which is attached to the engine body and ignites or forcibly ignites air-fuel mixture in the cylinder during a compression stroke and/or an expansion stroke, in which
the first ignition plug and the second ignition plug are spaced apart from each other in a third direction that is orthogonal to the first direction and the second direction.

In the cylinder, e.g., around compression top dead center, with ascent of the piston during the compression stroke, two vortex flows of the air-fuel mixture, each of which swirls around an axis extending in the second direction, are aligned in the third direction with a center of the cylinder being interposed therebetween and formed in opposite directions from each other.

The first ignition plug and the second ignition plug ignite or forcibly ignite the air-fuel mixture before the compression top dead center. The first ignition plug and the second ignition plug may ignite or forcibly ignite at a timing around the compression top dead center.

In the spark ignition engine, the air-fuel mixture that contains air and flows into the cylinder during the intake stroke forms characteristic flows in the cylinder e.g., around the compression top dead center. With ascent of the piston during the compression stroke, the vortex flows of the air-fuel mixture, each of which swirls around an axis extending in the second direction, are formed. The second direction is a direction in which the intake port and the exhaust port oppose each other. The two vortex flows are formed in alignment in the third direction orthogonal to the second direction with the center of the cylinder being interposed therebetween. Swirling directions of the two vortex flows are opposite to each other.

The spark ignition engine includes two ignition plugs that are the first ignition plug and the second ignition plug. The first ignition plug and the second ignition plug are spaced apart from each other in the third direction. The first ignition plug corresponds to one of the two vortex flows, and the second ignition plug corresponds to the other of the two vortex flows.

Each of the two ignition plugs forcibly ignites the vortex flow of the air-fuel mixture. Heat is supplied to the air-fuel mixture from a discharge path that is formed between electrodes of the ignition plugs. The flow of the air-fuel mixture extends the discharge path. The extension of the discharge path increases a heat supply area to the air-fuel mixture. The temperature of the air-fuel mixture around the ignition plugs is rapidly increased. An ignition delay from the discharge of the ignition plugs to ignition of the air-fuel mixture is shortened by the vortex flows.

The vortex flows also convey a flame to disperse the heat. Due to shortening of the ignition delay by the extension of the discharge path and the conveyance of the flame, an initial laminar combustion velocity S_{L} is increased in flame propagation combustion.

As the flame by the laminar combustion is enlarged, the combustion in the cylinder shifts from the laminar combustion to turbulent combustion. After the transition to the turbulent combustion, the turbulent combustion is promoted by the flow caused by the vortex flows.

Since the first ignition plug and the second ignition plug are spaced apart from each other in the third direction, the flame that is generated by the forcible ignition by the first ignition plug and the flame that is generated by the forcible ignition by the second ignition plug propagate independently. An apparent heat generation amount in the cylinder is doubled until the two flames collide with each other.

In this way, the spark ignition engine can promote the flame propagation combustion. A large amount of EGR gas is introduced into the cylinder. Thus, even when the air-fuel mixture is significantly diluted, the engine can ensure high combustion stability. An engine with high thermal efficiency is realized.

A tumble flow may not be generated in the cylinder by a flow of the intake air that flows into the cylinder through the intake port.

The tumble flow is the vortex flow that swirls around the axis extending along the third direction. When the tumble flow is formed in the cylinder, the formation of the above-described flows, that is, the two vortex flows swirling around the axis extending along the second direction are inhibited.

The absence of the tumble flow in the cylinder promotes the formation of the two vortex flows, each of which swirls around the axis extending along the second direction, in the spark ignition engine. The spark ignition engine can promote the flame propagation combustion by using the two vortex flows.

The intake port may have a connection portion connected to a ceiling surface of the cylinder and a communication portion connected to the connection portion, and
an angle that is defined by the communication portion and the connection portion when a line of sight is parallel to the third direction may be set to an angle at which a flow is not separated between the communication portion and the connection portion.

In general, since a connection port of the intake port connected to the intake passage is opened to a side surface of the engine body, there is an angular difference between an angle of the communication portion with respect to the first direction and an angle of the connection portion with respect to the first direction, and the angle of the communication portion with respect to the first direction is larger than the angle of the connection portion with respect to the first direction.

When the separation of the flow occurs between the communication portion and the connection portion having the angular difference, the flow along the ceiling surface of the cylinder is dominant in the intake air flowing into the cylinder from the intake port, and the tumble flow is generated in the cylinder.

When the separation of the flow does not occur between the communication portion and the connection portion, the intake air that flows into the cylinder from the intake port flows into the cylinder from an entire skirt area of an intake valve that opens/closes the intake port. As a result of the suppression of the flow along the ceiling surface of the cylinder, the occurrence of the tumble flow in the cylinder is suppressed.

In the case where the angle defined by the communication portion and the connection portion is large when a line of sight is parallel to the third direction, the angular difference between the angle of the communication portion with respect to the first direction and the angle of the connection portion with respect to the first direction is small. When the angular difference between the angle of the communication portion with respect to the first direction and the angle of the connection portion with respect to the first direction is small, the flow is not or is hardly separated between the communication portion and the connection portion.

In addition, since the intake air flows into the cylinder from the entire skirt area of the intake valve that opens/closes the intake port, the amount of the air flowing into the cylinder is increased. In the spark ignition engine, filling efficiency is improved by suppressing the tumble flow.

The intake port may include a first intake port and a second intake port that are aligned in the third direction, and
each of the first intake port and the second intake port may extend in the second direction.

Two substantially parallel intake ports of the first intake port and the second intake port extend in the second direction. Since the intake air flows into the cylinder evenly or substantially evenly from each of the first intake port and the second intake port, generation of the swirl flow in the cylinder is suppressed. The suppression of the swirl flow promotes the formation of the two vortex flows, each of which swirls around an axis extending along the second direction.

The ceiling surface of the cylinder may have a pent-roof shape in which each of a connection surface of the intake port and a connection surface of the exhaust port is inclined toward the center of the cylinder, and
in a ridgeline portion that extends in the third direction on the pent-roof shaped ceiling surface, the first ignition plug and the second ignition plug may be located on both sides with the center of the cylinder being interposed therebetween.

The ridgeline portion on the pent-roof shaped ceiling surface is located near the center of the cylinder in the second direction. Since the first ignition plug and the second ignition plug forcibly ignite the air-fuel mixture near the center of the cylinder, the flame easily propagates from the vicinity of the center of the cylinder to peripheral portions in the second direction, respectively. This is advantageous for promoting the flame propagation combustion in the spark ignition engine.

In the ridgeline portion, the first ignition plug and the second ignition plug, which are located on both of the sides of the center of the cylinder, can forcibly ignite the two vortex flows, respectively.

The spark ignition engine further includes an injector that injects fuel into the cylinder, in which
in the ridgeline portion, the injector is located between the first ignition plug and the second ignition plug.

Since the injector injects fuel between the two vortex flows, fuel concentration of each of the two vortex flows can be equalized or substantially equalized. The combustion by the two flames proceeds equally with the forcible ignition by the first ignition plug and the second ignition plug.

The piston may have a cavity that is recessed from a top surface, and
the first ignition plug and the second ignition plug may be located on an inner side of an edge of an opening of the cavity in the third direction.

Since the first ignition plug and the second ignition plug are located on the inner side of the edge of the opening of the cavity in the third direction, the first ignition plug and the second ignition plug can forcibly ignite the air-fuel mixture in the cavity.

The opening of the cavity may have a circular shape that is coaxial with a center of the piston, and
at a center in the cavity, the piston may have a crest that is raised in the first direction from a bottom of the cavity.

The crest that is located at the center in the cavity divides the inside of the cavity into a region on one side and a region on the other side of the crest in the third direction. The two vortex flows are stably formed in the region on the one side and the region on the other side of the crest, respectively.

The crest may have a shape that is raised while an outer diameter thereof is reduced or gradually reduced from a peripheral portion to the center in the cavity.

In each of the region on the one side and the region on the other side of the crest, the crest that is raised from the bottom of the cavity guides the flow of the air-fuel mixture in a direction from the center of the cavity toward the peripheral portion from a top portion of the crest toward the bottom of the cavity. The cavity and the crest stably form the two vortex flows.

On each of both sides of the center of the cylinder in the third direction, the vortex flow of the air-fuel mixture may swirl in a direction from outside toward the inside of the cylinder along the ceiling surface of the cylinder and in a direction from the inside toward the outside of the cylinder along the bottom of the cavity opposing the ceiling surface, and/or
in the third direction, an electrode of each of the first ignition plug and the second ignition plug may be located between the crest and the edge of the cavity.

Since the electrode of each of the first ignition plug and the second ignition plug is located between the crest and the edge of the cavity in the third direction, the first ignition plug and the second ignition plug are located near the edge of the opening of the cavity.

A direction of the vortex flow is a direction from the outside toward the inside of the cylinder along the ceiling surface of the cylinder, and is a direction from the inside toward the outside of the cylinder along the bottom of the cavity.

The flame that is generated in each of the first ignition plug and the second ignition plug is promptly conveyed to the inside of the cavity along the ceiling surface of the cylinder by the inward flow from the outside of the cylinder. Thus, the flame propagation combustion is promoted.

On the top surface of the piston, an outer side of the opening of the cavity may be a squish portion that generates a squish flow in a central direction of the cylinder e.g., around the compression top dead center, and
a peripheral wall that connects the edge of the opening of the cavity and the bottom of the cavity may be inclined such that a diameter of the cavity is increased from the bottom toward the opening.

As being directed from the peripheral portion toward the center of the cylinder, the squish flow promotes the inward flow from the outside of the cylinder along the ceiling surface of the cylinder.

However, in the case where the inward flow from the outside of the cylinder along the ceiling surface of the cylinder is excessively intense, the discharge path of the first ignition plug or the second ignition plug is possibly broken.

Since the peripheral wall of the cavity is inclined such that the diameter of the cavity is increased from the bottom toward the opening, the flow that is directed from the bottom to the opening along the peripheral wall has a component that opposes the squish flow. Since the flow along the peripheral wall of the cavity interferes with the squish flow, the squish flow can be weakened. The inward flow from the outside of the cylinder along the ceiling surface of the cylinder is relaxed, and such an intense flow that breaks the discharge path is suppressed.

The spark ignition engine further includes: an EGR passage through which the exhaust gas discharged from the exhaust port is partially recirculated as EGR gas to the intake port; and an EGR valve that adjusts an amount of the EGR gas to be recirculated to the intake port, in which
the injector may inject the fuel such that an air-fuel ratio of the air-fuel mixture becomes a stoichiometric air-fuel ratio.

As described above, the spark ignition engines disclosed herein can promote the flame propagation combustion. A large amount of the EGR gas is introduced into the cylinder. Thus, even when the air-fuel mixture is significantly diluted, the spark ignition engine can ensure high combustion stability. The thermal efficiency of the spark ignition engine can be improved by increasing a specific heat ratio by diluting the air-fuel mixture.

In addition, since the large amount of the EGR gas is introduced into the cylinder, a combustion temperature is reduced, and thus wall surface heat transfer is suppressed.

When the amount of the air and the amount of the EGR gas that are introduced into the cylinder are adjusted by adjusting the amount of the EGR gas by the EGR valve, pump loss is reduced.

As a result, the spark ignition engine with high thermal efficiency is realized.

In addition, since the air-fuel ratio of the air-fuel mixture is the stoichiometric air-fuel ratio, it is advantageous for improving output of the spark ignition engine, and it is possible to purify the exhaust gas by using a three-way catalyst.

The first ignition plug and the second ignition plug may ignite or forcibly ignite the air-fuel mixture during the compression stroke, and
the ignited or forcibly ignited air-fuel mixture may initiate flame propagation combustion, and after the compression top dead center, unburned air-fuel mixture may undergo compression ignition.

Since a combustion period after initiation of CI combustion is short, so-called SPCCI combustion is advantageous for improving the thermal efficiency of the spark ignition engine. As described above, the spark ignition engine can ensure high combustion stability by promoting SI combustion before the initiation of the CI combustion. Since the large amount of the EGR gas can be introduced into the cylinder, the thermal efficiency of the spark ignition engine is significantly improved.

The present invention also provides a method for operating a spark ignition engine, as defined in claim 13. In an embodiment of the method for operating this spark ignition engine,
in an intake stroke, intake air that contains at least air flows into a cylinder of a spark ignition engine through an intake port, and
in a compression stroke, with ascent of a piston in a first direction in the cylinder, two vortex flows of air-fuel mixture, each of which swirls around an axis extending in a second direction orthogonal to the first direction, are formed in alignment in a third direction orthogonal to the first direction and the second direction with a center of the cylinder being interposed therebetween and in opposite directions from each other in the cylinder, e.g., around compression top dead center.

Before the compression top dead center or at a timing around the compression top dead center, a first ignition plug and a second ignition plug that correspond to the two vortex flows may ignite or forcibly ignite the air-fuel mixture. In other words, before the compression top dead center, a first ignition plug and a second ignition plug provided for the two vortex flows may ignite or forcibly ignite the air-fuel mixture.

The first ignition plug, which corresponds to or is provided for one of the two vortex flows formed in the cylinder e.g., before the compression top dead center or around the compression top dead center, and the second ignition plug, which corresponds to or is provided for the other of the two vortex flows, ignite or forcibly ignite the vortex flows of the air-fuel mixture, respectively. As described above, the spark ignition engine can promote the flame propagation combustion. By introducing the large amount of the EGR gas into the cylinder, high combustion stability can be ensured even when the air-fuel mixture is significantly diluted. The spark ignition engine with the high thermal efficiency is realized.

The first ignition plug and the second ignition plug may ignite or forcibly ignite the air-fuel mixture during the compression stroke, and
the forcibly ignited air-fuel mixture may initiate flame propagation combustion, and after the compression top dead center, unburned air-fuel mixture may undergo compression ignition.

In the spark ignition engine that performs the SPCCI combustion, since the large amount of the EGR gas can be introduced into the cylinder, the thermal efficiency of the spark ignition engine is significantly improved.

Exhaust gas that is discharged from an exhaust port may be at least partially recirculated to the intake port through an EGR passage, and
an injector may inject fuel such that an air-fuel ratio of the air-fuel mixture becomes a stoichiometric air-fuel ratio.

Since the large amount of the EGR gas is introduced into the cylinder, the operation of the spark ignition engine with the high thermal efficiency is realized.

### [Advantageous Effects]

According to the spark ignition engine and the method for operating the spark ignition engine described above, combustion stability can be ensured even when the large amount of the EGR gas is recirculated into the cylinder.

### [Brief Description of Drawings]

[FIG. 1] FIG. 1 illustrates a spark ignition engine.
[FIG. 2] FIG. 2 is a block diagram of the spark ignition engine.
[FIG. 3] FIG. 3 illustrates an operation control map of the spark ignition engine.
[FIG. 4] FIG. 4 is a plan view and a side view illustrating a structure of an intake port.
[FIG. 5] FIG. 5 is a perspective view illustrating arrangement of an ignition plug and an injector on a ceiling of a cylinder and the shape of a top surface of a piston.
[FIG. 6] FIG. 6 illustrates a cross section that is taken along line VI-VI in FIG. 5.
[FIG. 7] FIG. 7 illustrates transition of a flow of the air-fuel mixture in the cylinder during a compression stroke.
[FIG. 8] FIG. 8 illustrates the transition of the flow of the air-fuel mixture in the cylinder during the compression stroke.
[FIG. 9] FIG. 9 illustrates a change in a combustion velocity as a flame expands.
[FIG. 10] FIG. 10 illustrates transition of flame propagation after ignition of the ignition plug.
[FIG. 11] FIG. 11 illustrates the transition of the flame propagation after the ignition of the ignition plug.
[FIG. 12] FIG. 12 illustrates a change in a heat generation rate in SPCCI combustion.
[FIG. 13] FIG. 13 is a graph that compares a change in a fuel consumption rate with respect to an EGR rate between a conventional example and an embodiment.
[FIG. 14] FIG. 14 is a flowchart of a method for operating the spark ignition engine.
[FIG. 15] FIG. 15 is a perspective view illustrating a shape of a top surface of a piston according to a modified example.
[FIG. 16] FIG. 16 is a cross-sectional view illustrating a shape of a cavity according to the modified example.

### [Description of Embodiments]

Hereinafter, a description will be made on an embodiment of a spark ignition engine and a method for operating the spark ignition engine with reference to the drawings. The spark ignition engine and the method for operating the spark ignition engine described herein are illustrative.

### (Overall Structure of Spark Ignition Engine)

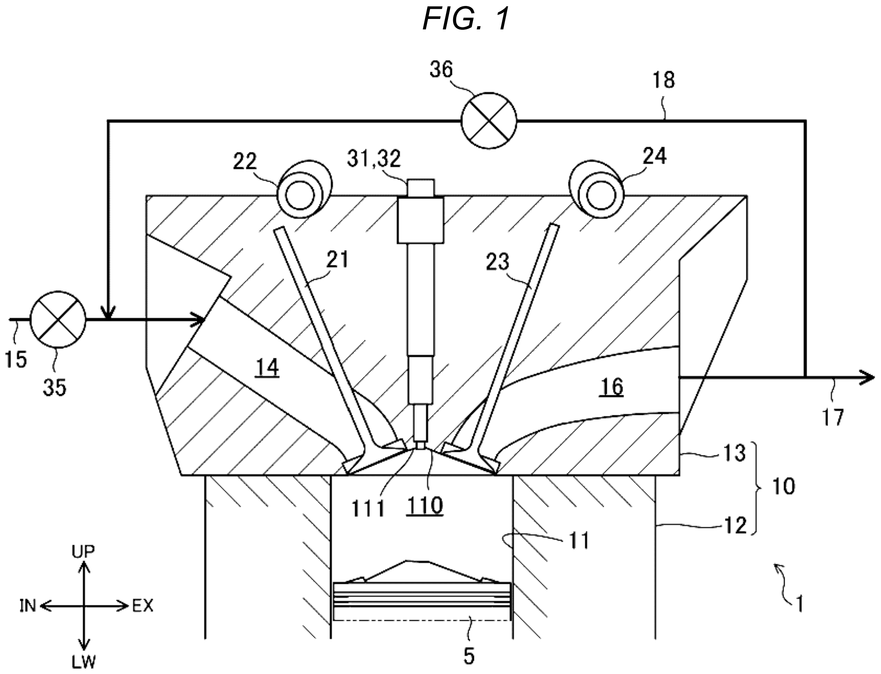

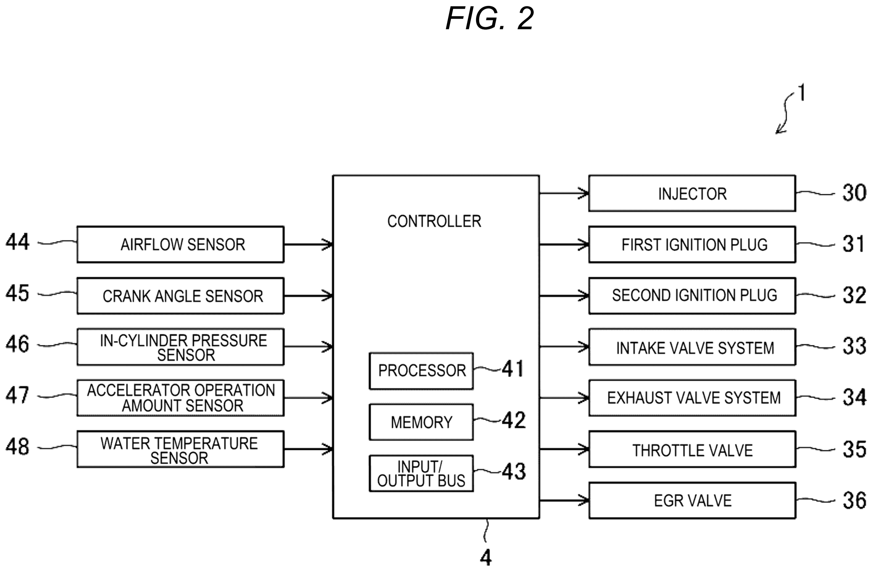

FIG. 1 illustrates a spark ignition engine 1. FIG. 2 is a block diagram of the spark ignition engine 1. In the following description, the spark ignition engine 1 will simply be referred to as the engine 1.

The engine 1 is mounted e.g., on a vehicle, an automobile, or a four-wheeled automobile. When the engine 1 is operated, the automobile travels.

For example, the engine 1 is a four-stroke engine. In a cylinder 11, which will be described below, an intake stroke, a compression stroke, an expansion stroke, and an exhaust stroke are repeated. Fuel of the engine 1 may be gasoline. The fuel may be liquid fuel that includes at least gasoline.

The engine 1 includes a cylinder block 12. One or a plurality of cylinders 11 is formed in the cylinder block 12. The engine 1 may be a multicylinder engine. Each of the cylinders 11 is opened to an upper surface of the cylinder block 12. In the engine 1 of the illustrated example, an axis of each of the cylinders 11 extends in an up-down direction (or an up-down direction of the automobile).

A direction of the axis of each of the cylinders 11 is not limited to the up-down direction. The up-down direction corresponds to a first direction.

A piston 5 is inserted in the cylinder 11. The piston 5 reciprocates in the up-down direction in the cylinder 11.

For example, the piston 5 is connected to a crankshaft via a connecting rod. The shape of a top surface of the piston 5 will be described in detail below.

The engine 1 includes a cylinder head 13. The cylinder head 13 is located on top of the cylinder block 12. A lower surface of the cylinder head 13 closes the opening of the cylinder 11.

The lower surface of the cylinder head 13 may form a ceiling surface 110 of the cylinder 11. For example, the cylinder block 12 and the cylinder head 13 constitute an engine body 10 of the spark ignition engine 1.

The cylinder head 13 has an intake port 14. The intake port 14 is opened to the ceiling surface 110 of the cylinder 11. The intake port 14 communicates with the cylinder 11. An intake passage 15 is connected to the intake port 14.

The intake port 14 allows intake air, that contains at least air, to flow into the cylinder 11 at least during the intake stroke. The shape of the intake port 14 will be described in detail below.

A throttle valve 35 may be interposed in the intake passage 15. The throttle valve 35 changes a flow rate of the air that flows through the intake passage 15. For example, in a specific operation state of the engine 1, the throttle valve 35 is fully opened, and the amount of the air that flows into the cylinder 11 is adjusted by adjusting an opening degree of an EGR valve 36, which will be described below.

An intake valve 21 opens and/or closes the intake port 14. The intake valve 21 may be a poppet valve and opens and/or closes the opening of the intake port 14 in the ceiling surface 110.

An intake valve system 33 (see FIG. 2), that includes an intake camshaft 22, may open and/or close the intake valve 21 at a predetermined timing. For example, the intake camshaft 22 is coupled to the crankshaft of the engine 1 and rotates in synchronization with the rotation of the crankshaft.

The intake valve system 33 may be a variable valve system that changes or continuously changes the opening and/or closing timing of the intake valve 21. For example, the variable valve system may be intake sequential-valve timing (S-VT) that changes or continuously changes a rotational phase of the intake camshaft 22.

The cylinder head 13 has an exhaust port 16. The exhaust port 16 opposes the intake port 14 in a horizontal direction. An intake and/or exhaust direction of the engine 1 may corresponds to a second direction. In other words, the exhaust port 16 opposes the intake port 14 in the second direction.

The exhaust port 16 is opened to the ceiling surface 110 of the cylinder 11. The exhaust port 16 communicates with the cylinder 11.

An exhaust passage 17 is connected to the exhaust port 16. The exhaust port 16 discharges exhaust gas that is burned in the cylinder 11 to the outside of the cylinder 11 at least during the exhaust stroke.

A purifier that purifies the exhaust gas may be attached to the exhaust passage 17. The purifier includes a three-way catalyst, for example. The three-way catalyst oxidizes hydrocarbons and carbon monoxide in the exhaust gas to carbon dioxide and reduces nitrogen oxides to nitrogen.

An exhaust valve 23 opens and/or closes the exhaust port 16. The exhaust valve 23 may be a poppet valve and opens and/or closes the opening of the exhaust port 16 in the ceiling surface 110.

An exhaust valve system 34 (see FIG. 2), that includes an exhaust camshaft 24, may open and/or close the exhaust valve 23 at a predetermined timing. The exhaust camshaft 24 is coupled to the crankshaft of the engine 1 and rotates in synchronization with the rotation of the crankshaft.

The exhaust valve system 34 may be a variable valve system that changes or continuously changes the opening and/or closing timing of the exhaust valve 23. For example, the variable valve system may be exhaust S-VT that continuously changes a rotational phase of the exhaust camshaft 24.

For example, the intake valve system 33 and the exhaust valve system 34 adjust valve opening periods of the intake valve 21 and the exhaust valve 23, respectively, and burned gas can thereby remain in the cylinder 11 for the next cycle. The intake valve system 33 and the exhaust valve system 34 may constitute an internal exhaust gas recirculation (EGR) system.

For example, the ceiling surface 110 of the cylinder 11 has a so-called pent-roof shape. That is, the ceiling surface 110 has a connection surface, to which the intake port 14 is connected, and a connection surface, to which the exhaust port 16 is connected, and each of the two connection surfaces is inclined to be an upgrade toward a center of the cylinder 11.

A ridgeline portion 111 of the pent-roof shaped ceiling surface 110 extends in the front-rear direction of the engine 1 or an axial direction of the crank shaft. The front-rear direction may be the horizontal direction that is orthogonal to the intake and/or exhaust direction, and corresponds to a third direction.

An EGR passage 18 may communicate between the exhaust passage 17 with the intake passage 15. The exhaust gas that is discharged to the exhaust passage 17 is at least partially recirculated into the intake passage 15 through the EGR passage 18. Together with the air, the exhaust gas that is recirculated into the intake passage 15 flows as external EGR gas into the cylinder 11.

The EGR valve 36 may be interposed in the middle of the EGR passage 18. The EGR valve 36 changes a flow rate of the exhaust gas that flows into the intake passage 15 through the EGR passage 18.

Since an opening degree of the EGR valve 36 is adjusted, an amount of the external EGR gas that flows into the cylinder 11 is adjusted, and the amount of the air that flows into the cylinder 11 can also be adjusted. That is, under a constant throttle opening degree, the amount of air is reduced when the amount of the external EGR gas is increased, and the amount of air is increased when the amount of the external EGR gas is reduced.

The engine 1 may include an injector 30. The injector 30 injects fuel into the cylinder 11.

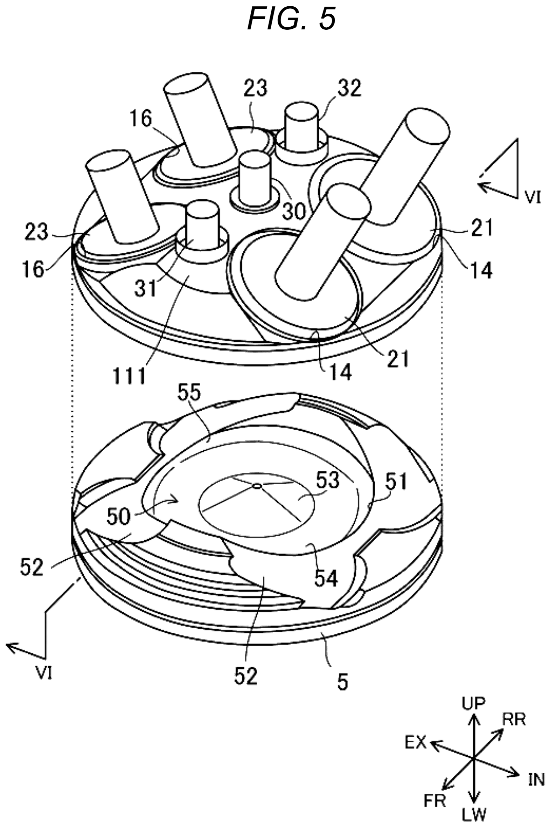

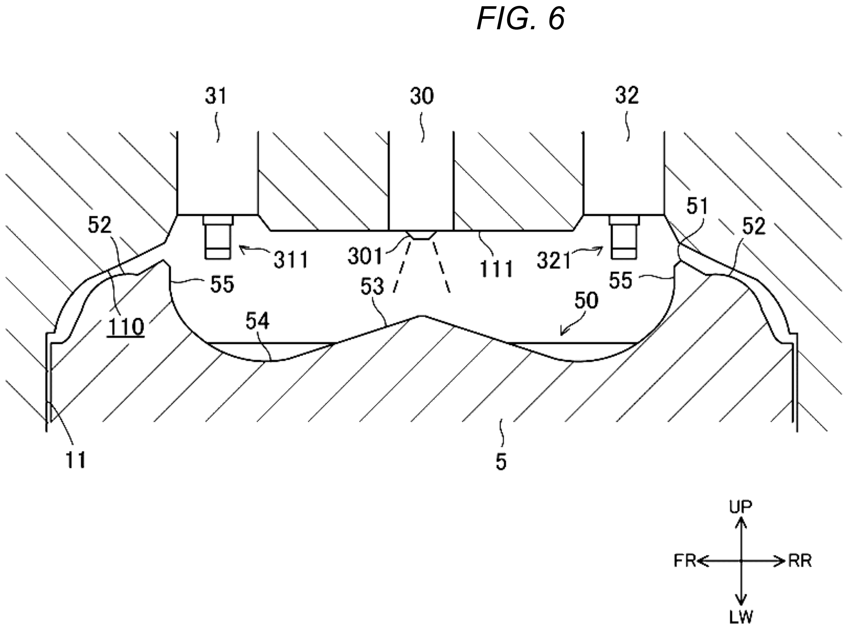

For example, as illustrated in FIGs. 5 or 6, the injector 30 is located at a center of the cylinder 11 in the ridgeline portion 111 of the ceiling surface 110 of the cylinder 11. On the ceiling surface 110, an injection hole 301 of the injector 30 faces the inside of the cylinder 11. The injector 30 injects fuel downward.

The engine 1 includes a first ignition plug 31 and a second ignition plug 32. The first ignition plug 31 and the second ignition plug 32 ignite or forcibly ignite the air-fuel mixture in the cylinder 11.

For example, as illustrated in FIG. 1, 5, or 6, the first ignition plug 31 and the second ignition plug 32 are located in the ridgeline portion 111 of the ceiling surface 110 of the cylinder 11. The first ignition plug 31 is located on one side of the center of the cylinder 11, that is, e.g., on the front side of the engine 1, and the second ignition plug 32 is located on the other side of the center of the cylinder 11, that is, e.g., on the rear side of the engine 1. The first ignition plug 31 and the second ignition plug 32 are spaced apart from each other in the front-rear direction of the engine 1.

The injector 30 is located between the first ignition plug 31 and the second ignition plug 32, e.g., in the front-rear direction of the engine 1. A distance between the first ignition plug 31 and the injector 30 and a distance between the second ignition plug 32 and the injector 30 are the same or substantially the same.

On the ceiling surface 110 of the cylinder 11, an electrode 311 of the first ignition plug 31 is positioned in a manner to face the inside of the cylinder 11. On the ceiling surface 110, an electrode 321 of the second ignition plug 32 is also positioned in a manner to face the inside of the cylinder 11. The electrodes 311, 321 described herein may include a center electrode and a side electrode.

A controller 4 controls the operation of the engine 1. The controller 4 may be a well-known microcomputer-based controller. For example, the controller 4 includes a processor 41, memory 42, and an input/output bus 43. The processor 41 includes one or more central processing units (CPU). The processor 41 includes one or more chips. The memory 42 includes random access memory (RAM) and read only memory (ROM). The memory 42 is non-volatile memory, for example. The input/output bus 43 is a bus that inputs/outputs an electric signal to/from the processor 41.

As illustrated in FIG. 2, one or various sensors may be connected to the controller 4. The sensors each output a detection signal to the controller 4.

An airflow sensor 44 may be attached to the intake passage 15. The airflow sensor 44 outputs a signal corresponding to a flow rate of the air that flows through the intake passage 15 to the controller 4.

A crank angle sensor 45 may be attached to the engine body 10. The crank angle sensor 45 outputs a signal corresponding to a rotation angle of the crankshaft to the controller 4.

An in-cylinder pressure sensor 46 may be attached to the cylinder head 13 in a manner to face the inside of the cylinder 11. The in-cylinder pressure sensor 46 outputs a signal corresponding to a pressure in the cylinder 11 to the controller 4.

An accelerator operation amount sensor 47 may be attached to an accelerator pedal mechanism. The accelerator operation amount sensor 47 outputs a signal corresponding to an operation amount of an accelerator pedal to the controller 4.

A water temperature sensor 48 may be attached to the engine body 10. The water temperature sensor 48 outputs a signal corresponding to the temperature of cooling water of the engine 1 to the controller 4.

For example, the controller 4 determines the operation state of the engine 1 on the basis of the signals from the sensors 44 to 48. The controller 4 sets a control amount of each of the devices 30 to 36 according to a control logic stored in the memory 42.

The controller 4 may output a control signal related to the set control amount to each of the injector 30, the first ignition plug 31, the second ignition plug 32, the intake valve system 33, the exhaust valve system 34, the throttle valve 35, and the EGR valve 36. When one or more of the devices 30 to 36 are driven, the engine 1 is operated.

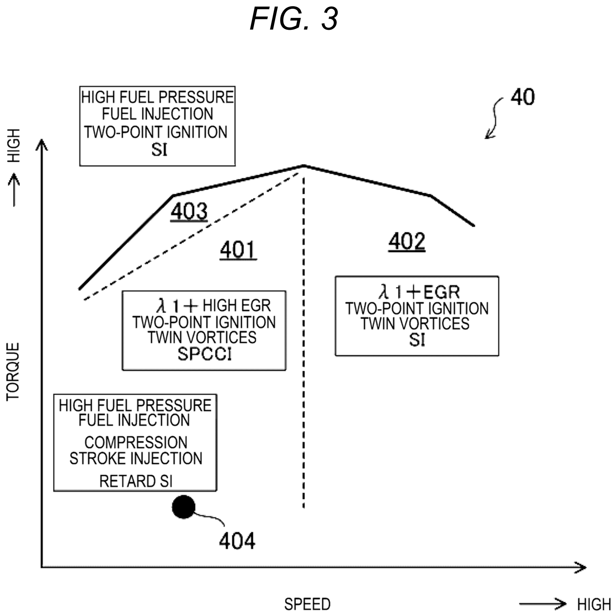

FIG. 3 illustrates an operation control map 40 of the engine 1. The operation control map 40 is stored in the memory 42. The operation control map 40 is defined by a speed of the engine 1 and torque of the engine 1. The engine 1 has one or more operation mode, e.g., four roughly-divided operation modes.

A first operation mode may be a mode in which the engine 1 is operated by spark controlled compression ignition (SPCCI) combustion. The first operation mode corresponds to an operation region 401. In other words, the engine 1 may be operated in the first operation mode in the operation region 401.

The operation region 401 is an operation region on a low speed side or a lower speed side. The region on the low speed side is a region on the low speed side in a case where the entire operation region of the engine 1 is divided or roughly and equally divided into two of the low speed side and a high speed side. The operation region 401 is also a region from the low torque (or lower torque) to the medium torque.

For example, in the first operation mode, an air-fuel ratio of the air-fuel mixture is a stoichiometric air-fuel ratio (that is, λ1), and the EGR gas or the large amount of the EGR gas is introduced into the cylinder 11. An EGR rate may be set to 40 to 50%. The EGR rate is a rate of the EGR gas with respect to total gas in the cylinder 11.

The EGR gas contains the external EGR gas and internal EGR gas. Since the large amount of the EGR is introduced into the cylinder 11, (1) a specific heat ratio is increased by diluting the air-fuel mixture, (2) wall surface heat transfer is suppressed by reducing a combustion temperature, and (3) a pressure difference between the intake and exhaust strokes is reduced. In the operation region 401, thermal efficiency of the engine 1 is improved.

In the first operation mode, both the first ignition plug 31 and the second ignition plug 32 may ignite or forcibly ignite the air-fuel mixture during the compression stroke. The air-fuel mixture initially undergoes flame propagation combustion, after which the unburned air-fuel mixture undergoes compressed self-ignition e.g., around compression top dead center.

In the first operation mode, two vortex flows of the air-fuel mixture are formed in the cylinder 11 e.g., around the compression top dead center. Hereinafter, the two vortex flows may be referred to as "twin vortices".

The formation of the twin vortices will be described in detail below. By the formation of the twin vortices and two-point ignition by the first ignition plug 31 and the second ignition plug 32, even when the large amount of the EGR gas is introduced into the cylinder 11, combustion stability of the engine 1 is not degraded.

The second operation mode may be a mode in which the engine 1 is operated with SI combustion. The second operation mode corresponds to an operation region 402. In other words, the engine 1 may be operated in the second operation mode in the operation region 402. The operation region 402 is an operation region on the higher speed side than the operation region 401, and is a region from the low torque (or lower torque) to the highest torque.

In the second operation mode, the air-fuel ratio of the air-fuel mixture may be the stoichiometric air-fuel ratio, and the smaller amount of the EGR gas than that in the operation region 401 is introduced into the cylinder 11.

The EGR rate may be set to about 15%. In the operation region 402, output of the engine 1 is increased by reducing the amount of the EGR gas that is introduced into the cylinder 11 and by increasing the amount of the air.

In the second operating mode, both the first ignition plug 31 and the second ignition plug 32 may ignite or forcibly ignite the air-fuel mixture during the expansion stroke. The air-fuel mixture undergoes the flame propagation combustion. The twin vortices are also formed in the second operation mode.

A third operation mode is a mode in which the engine 1 is operated by the SI combustion. The third operation mode corresponds to an operation region 403. In other words, the engine 1 may be operated in the third operation mode in the operation region 403. Similarly to the operation region 401, the operation region 403 is an operation region on the low speed side (or lower speed side), is a region where the torque is higher than that in the operation region 401, and is a high-torque region (or higher-torque region) including the highest torque.

In the third operation mode, fuel injection timing by the injector 30 may be set to a timing, e.g., late or retarded timing, around or at the compression top dead center. In addition, a pressure of the injected fuel may be increased.

By injecting the high-pressure fuel into the cylinder 11 around or at the compression top dead center, an intense flow generated by a fuel spray is formed in the cylinder 11. Both the first ignition plug 31 and the second ignition plug 32 ignite or forcibly ignite the air-fuel mixture.

The combination of the intense flow by the fuel spray and the two-point ignition promptly completes spark ignition combustion. In the low-speed, high-torque operation region 403, it is possible to increase the output of the engine 1 while suppressing occurrence of abnormal combustion including knocking.

A fourth operation mode may be a warm operation mode (or worm-up operation mode) of the purifier that includes the catalyst. The fourth operation mode may be executed in the case where the temperature of the cooling water is low after a start of the engine 1. An operation state 404 of the engine 1 in the fourth operation mode is a state where the speed is higher than an idle speed and/or the torque is low.

For example, in the fourth operation mode, the fuel injection at the high fuel pressure described above is performed during the compression stroke. In addition, in the fourth operation mode, the ignition plug may ignite in the expansion stroke, e.g., at retarded timing in the expansion stroke (that is, retard spark ignition (SI)). Exhaust loss is increased, and the unburned fuel can be supplied to the purifier. Due to an oxidation reaction of the unburned fuel, the temperature of the purifier is rapidly increased.

### (Engine Structure Forming Twin Vortices)

In the first operation mode and/or the second operation mode, the twin vortices are formed in the cylinder 11 e.g., around or at the compression top dead center. In order to form the twin vortices, in the engine 1, the intake port 14 has a characteristic structure, and/or the piston 5 also has a characteristic structure that contributes to the formation of the twin vortices. Hereinafter, the structure of the intake port 14 and/or the structure of the piston 5 will be described with reference to the drawings.

### (Structure of Intake Port)

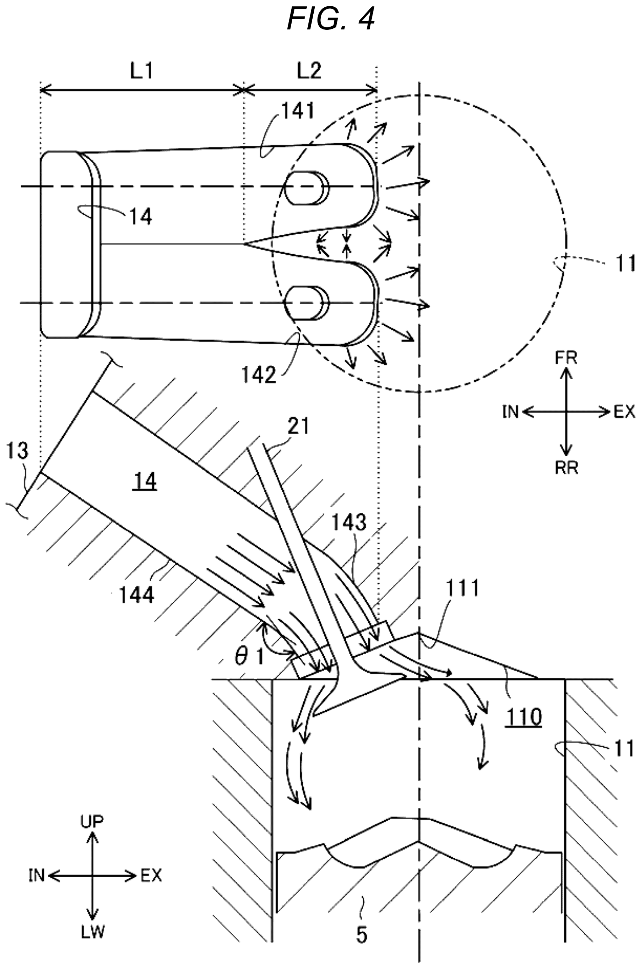

FIG. 4 illustrates the intake port 14 of the engine 1. As illustrated in a lower view of FIG. 4, a proximal end of the intake port 14 is opened to a side surface of the cylinder head 13. As illustrated in an upper view of FIG. 4, the intake port 14 may extend straight or substantially straight in the intake and/or exhaust direction toward the cylinder 11.

For example, in the cylinder head 13, the intake port 14 is branched into one or more ports, e.g., a first intake port 141 and a second intake port 142. That is, the proximal end side of the intake port 14 is not branched into two and is a common passage.

The first intake port 141 and the second intake port 142 may be aligned in the front-rear direction of the engine 1. The first intake port 141 and the second intake port 142 may also extend straight or substantially straight in the intake and/or exhaust direction toward the cylinder 11.

Each of the first intake port 141 and the second intake port 142 is connected to the ceiling surface 110 of the cylinder 11. A passage length L2 of each of the first intake port 141 and the second intake port 142 may be shorter than a passage length L1 of the common passage.

For example, the intake air flows into the cylinder 11 evenly or substantially evenly from each of the first intake port 141 and the second intake port 142. In the engine 1, generation of a swirl flow in the cylinder 11 is suppressed.

As illustrated in the lower view of FIG. 4, the intake port 14 may include a connection portion 143 and a communication portion 144. The connection portion 143 is a portion that is connected to the ceiling surface 110 of the cylinder 11, and includes a valve seat on which the intake valve 21 is seated.

The connection portion 143 may correspond or substantially correspond to the first intake port 141 and the second intake port 142. When a line of sight is directed in parallel with the front-rear direction of the engine 1, the connection portion 143 is orthogonal or substantially orthogonal to the ceiling surface 110.

The communication portion 144 is a portion that is connected to the connection portion 143, and may correspond to the common passage of the intake port 14. When the line of sight is directed in parallel with the front-rear direction of the engine 1, an angle of the communication portion 144 with respect to a vertical direction differs from an angle of the connection portion 143.

An angular difference between the angle of the communication portion 144 with respect to the vertical direction and the angle of the connection portion 143 with respect to the vertical direction is relatively small. In other words, an angle θ1 that is defined by the communication portion 144 and the connection portion 143 is relatively large.

Due to the large angle θ1, the intake air that flows from the communication portion 144 toward the connection portion 143 is not separated between the communication portion 144 and the connection portion 143. The suppression of the separation allows the intake air to flow into the cylinder 11 from an entire curtain area when the intake valve 21 is opened.

Arrows in the upper and lower views of FIG. 4 exemplify a flow direction of the intake air that flows into the cylinder 11. As illustrated in the lower view of FIG. 4, a flow of the intake air along the ceiling surface 110 is not dominant, and a downward flow along a cylinder liner from the intake valve 21 is also formed. In addition, as illustrated in the upper view of FIG. 4, it flows into the cylinder 11 substantially evenly from an entire circumference of an umbrella portion of the intake valve 21. As a result, in the engine 1, generation of a tumble flow in the cylinder 11 may also be suppressed. The curtain area refers to an annular region that is formed between the umbrella portion of the intake valve 21 and the valve seat in a state where the intake valve 21 is separated from the valve seat.

The intake port 14 does not deflect the intake air so as to prevent the generation of the tumble flow and/or a swirl flow in the cylinder 11. The intake port 14 may allow the intake air to flow from the entire curtain area into the cylinder 11.

For example, the intake port 14 is a high flow port, and the engine 1 can increase filling efficiency. The high flow feature of the intake port 14 is advantageous for introducing a large amount of the air and a large amount of the EGR gas into the cylinder 11.

### (Structure of Piston Top Surface)

FIG. 5 illustrates arrangement of the ignition plugs 31, 32 and the injector 30 on the ceiling of the cylinder 11 and the shape of the top surface of the piston 5. FIG. 6 corresponds to a cross section that is taken along line VI-VI in FIG. 5, and illustrates the inside of the cylinder 11 at the timing around the compression top dead center.

The piston 5 may has a cavity 50. The cavity 50 is recessed downward from the top surface of the piston 5. The top surface of the piston 5 is raised from each of the intake side and the exhaust side toward the center side of the piston 5 e.g., in a manner to correspond to the pent-roof shaped ceiling surface 110.

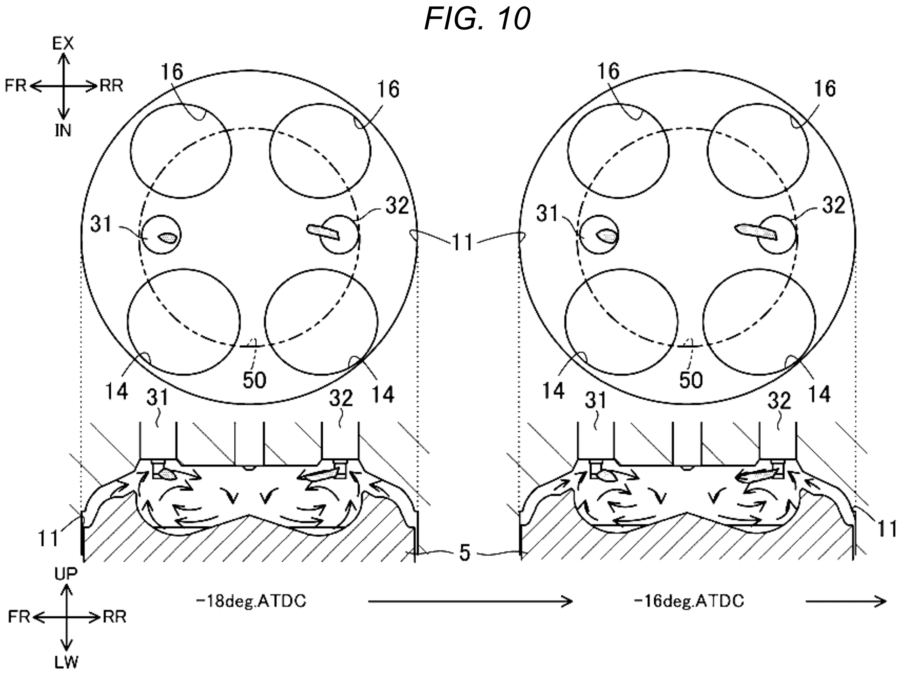

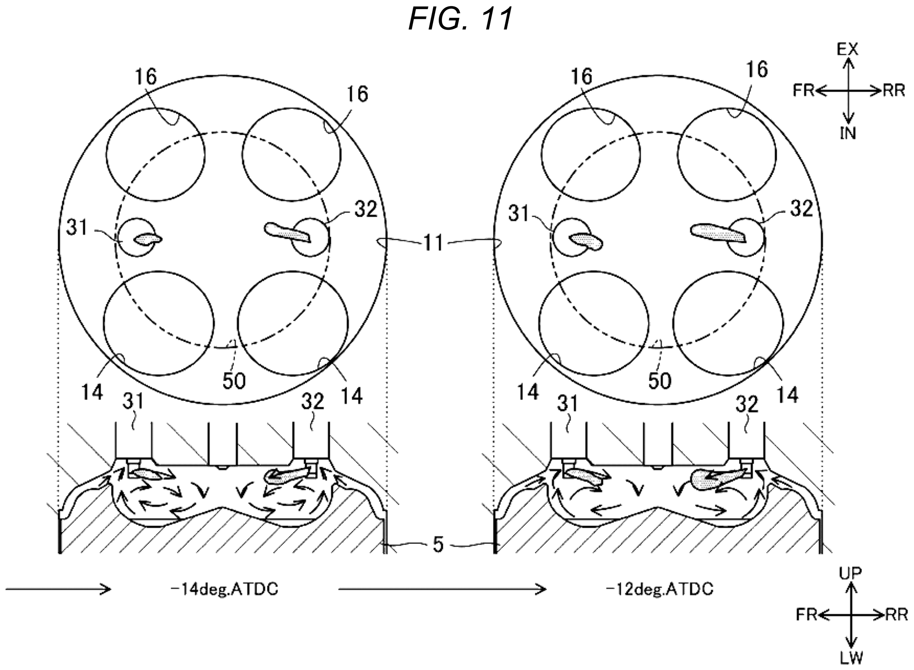

An opening 51 of the cavity 50 has a circular shape that is coaxial with a center of the piston 5 (also see the top views in FIG. 10 or FIG. 11). A diameter of the opening 51 may be relatively large. Each of the first ignition plug 31 and the second ignition plug 32 is located inside an edge of the opening 51.

On the top surface of the cavity 50, an outer side of the opening 51 constitutes a squish portion 52. As illustrated in FIG. 6, the squish portion 52 generates a squish flow toward a central direction of the cylinder 11 e.g., in a manner to oppose the ceiling surface 110 of the cylinder 11 at the timing around the compression top dead center in the cylinder 11.

The cavity 50 has a crest 53. The crest 53 is raised upward from a bottom 54 of the cavity 50. For example, the crest 53 is located at a center of the cavity 50.

The crest 53 has a shape that is raised while an outer diameter thereof is reduced or gradually reduced from a peripheral portion in the cavity 50 to the center. The shape of the crest 53 may be point-symmetric about a top portion thereof. The crest 53 has a conical or a substantially conical shape, and in the cross section illustrated in FIG. 6, a peripheral surface of the crest 53 is inclined with respect to a center axis of the cylinder 11.

An outer peripheral edge of the crest 53 is located inward of the cavity 50 from a peripheral wall 55 of the cavity 50. The peripheral wall 55 is a wall that connects an edge of the opening 51 of the cavity 50 and the bottom 54 of the cavity 50. As illustrated in the cross section of FIG. 6, the peripheral wall 55 is inclined such that a diameter of the cavity 50 is increased from the bottom 54 toward the opening 51, and is parallel to the center axis of the cylinder 11 at a position connected to the edge of the opening 51.

The electrode 311 of the first ignition plug 31 and the electrode 321 of the second ignition plug 32 may be located between the crest 53 and the edge of the opening 51 in the intake and/or exhaust direction.

### (Process of Forming Twin Vortices in Engine)

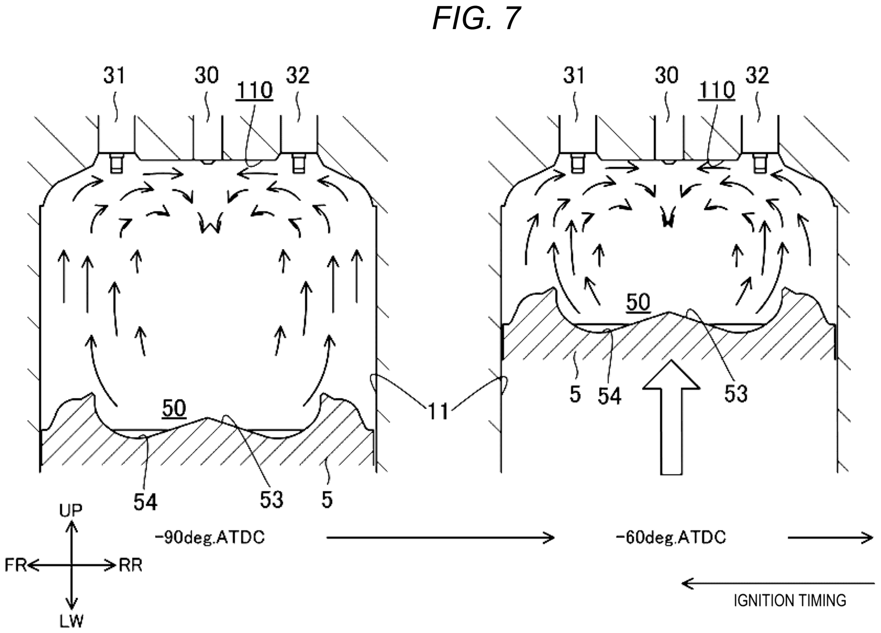

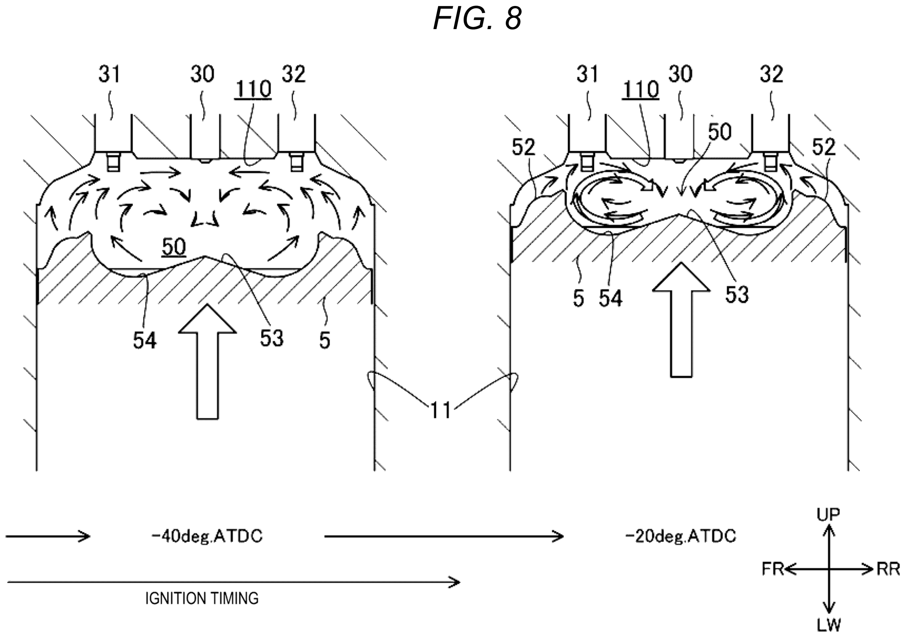

FIG. 7 and FIG. 8 are simulation results showing transition of the flow of the air-fuel mixture in the cylinder 11 during the compression stroke. FIG. 7 and FIG. 8 are cross-sectional views illustrating the inside of the cylinder 11 with the line of sight being parallel to the intake and/or exhaust direction of the engine 1.

A left view of FIG. 7 illustrates a state of the inside of the cylinder 11 around or at e.g., 90° before the compression top dead center, and a right view of FIG. 7 illustrates a state of the inside of the cylinder 11 around or at e.g., 60° before the compression top dead center. A left view of FIG. 8 illustrates a state of the inside of the cylinder 11 around or at e.g., 40° before the compression top dead center, which follows the right view of FIG. 7, and a right view of FIG. 8 illustrates a state of the inside of the cylinder 11 around or at e.g., 20° before the compression top dead center.

As described above, neither the swirl flow nor the tumble flow is formed in the cylinder 11. From each of the first intake port 141 and the second intake port 142, the intake air flows into the cylinder 11 over an entire circumference of the umbrella portion of the intake valve 21.

As illustrated in FIG. 7, at a middle stage of the compression stroke, a upward flow from down is formed along the cylinder liner in each of a front region and a rear region in the cylinder 11. The front region is a region on the left side of the center axis of the cylinder 11 in FIG. 7, and the rear region is a region on the right side of the center axis of the cylinder 11 in FIG. 7. A direction of the upward flow along the cylinder liner is changed at the ceiling surface 110, and a flow along the ceiling surface 110 from a peripheral edge portion of the inside of the cylinder 11 toward the center thereof is formed.

The middle stage of the compression stroke is a middle stage that is defined when the compression stroke is divided into three equal stages of an initial stage, the middle stage, and a last stage, and may be a period of 120° to 60° before the compression top dead center. The last stage of the compression stroke may be a period of 60° to 0° before the compression top dead center.

As illustrated in FIG. 8, at the last stage of the compression stroke, as the top surface of the piston 5 approaches the ceiling surface 110 of the cylinder 11, the flow from the peripheral edge portion of the inside of the cylinder 11 toward the center thereof is intensified at the ceiling surface 110.

In addition, since the flow of the air-fuel mixture is guided by the cavity 50 and the crest 53 of the piston 5, the flow from the center of the inside of the cylinder 11 toward the peripheral edge portion thereof is intensified at the bottom 54 of the cavity 50. At the bottom 54 on each side of the center axis of the cylinder 11, the cavity 50 and the crest 53 promote the flow in an opposite direction from the flow at the ceiling surface 110, and thus the formation of two vortex flows with the center of the cylinder 11 being located therebetween is promoted.

For example, at the timing around the compression top dead center, a squish flow in the squish portion 52 promotes the flow from the peripheral edge portion of the inside of the cylinder 11 toward the center thereof at the ceiling surface 110.

Then, as indicated by a white arrow in the right view of FIG. 8, in the cylinder 11, a vortex flow of the air-fuel mixture that swirls around an axis extending in the intake and/or exhaust direction of the engine 1 is formed e.g., around the compression top dead center. The two vortex flows are formed in alignment in the front-rear direction of the engine 1 with the center of the cylinder 11 being interposed therebetween.

For example, a swirl direction of each of the two vortex flows is a direction from the outside toward the inside of the cylinder 11 along the ceiling surface 110 and is a direction from the inside toward the outside of the cylinder 11 along the bottom 54 of the cavity 50. The swirl directions of the two vortex flows are opposite to each other.

### (Effects of Improving Combustion Stability of Engine by Twin Vortices)

As described above, in the first operation mode, the large amount of the EGR is introduced into the cylinder 11. The introduction of the large amount of the EGR degrades combustion stability while being advantageous for improving fuel consumption performance of the engine 1. In order to maintain combustion stability, the amount of the EGR that can be introduced into the cylinder 11 is limited.

In the technique disclosed herein, the formation of the twin vortices described above in the cylinder 11 and the two-point ignition by the first ignition plug 31 and the second ignition plug 32 are combined. In this way, even when the large amount of the EGR gas is recirculated into the cylinder 11, combustion stability is suppressed from being degraded. In the operation region 401, the engine 1 can introduce the large amount of the EGR gas into the cylinder 11.

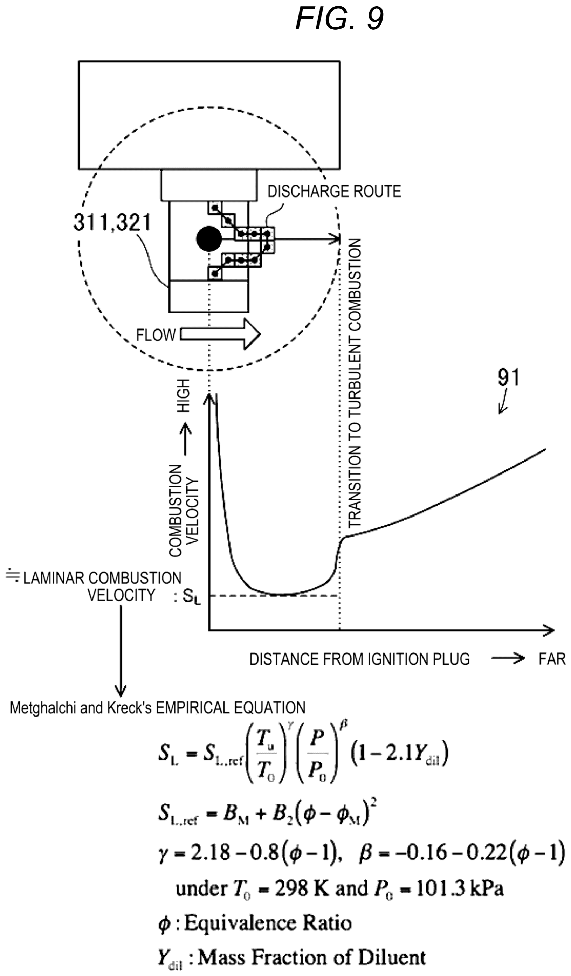

FIG. 9 illustrates a relationship 91 between a distance from each of the electrodes 311, 321 of the ignition plug to a flame surface in the flame propagation combustion and a combustion velocity. As illustrated in an upper view of FIG. 9, the distance between the flame surface and each of the electrodes 311, 321 can be represented as a diameter of a sphere that is centered between a center electrode and a side electrode.

After spark discharge by the ignition plug, the combustion proceeds at a laminar combustion velocity S_{L} until the flame reaches a certain size. The laminar combustion velocity S_{L} is a substantially constant speed. When the flame reaches the certain size, the subsequent combustion transitions to turbulent combustion. With the flow in the cylinder 11, the flame propagation is accelerated.

According to Metghalchi and Keck's empirical equation, the laminar combustion velocity S_{L} depends on an ambient temperature T, an ambient pressure P, an equivalence ratio φ of the air-fuel mixture, and a dilution ratio Ydil of the air-fuel mixture. Among these factors, when the dilution ratio of the air-fuel mixture, that is, the amount of the EGR gas that is introduced into the cylinder 11 is increased, the laminar combustion velocity S_{L} is reduced.

FIG. 10 and FIG. 11 are simulation results showing transition of the flame propagation after the ignition by the ignition plugs 31, 32. Upper views of FIG. 10 and FIG. 11 are views illustrating the inside of the cylinder 11 with the line of sight being parallel to the up-down direction of the engine 1. Lower views thereof are cross-sectional views illustrating the inside of the cylinder 11 with the line of sight being parallel to the intake/exhaust direction of the engine 1.

The left views of FIG. 10 illustrate the state of the inside of the cylinder 11 at 18° before the compression top dead center, and the right views of FIG. 10 illustrate the state of the inside of the cylinder 11 at 16° before the compression top dead center. The left views of FIG. 11 illustrate the state of the inside of the cylinder 11 at 14° before the compression top dead center, which follows the right views of FIG. 10, and the right views of FIG. 11 illustrate the state of the inside of the cylinder 11 at 12° before the compression top dead center.

At a timing at which each of the first ignition plug 31 and the second ignition plug 32 ignites or forcibly ignites the air-fuel mixture, the twin vortices are formed in the cylinder 11. The injector 30 injects fuel at least in the intake stroke. The fuel that is injected into the cylinder 11 from the injection hole 301 is dispersed by the flow in the cylinder 11 and forms a substantially homogeneous air-fuel mixture in the cavity 50.

Each of the two ignition plugs 31, 32 ignites or forcibly ignites the respective vortex flow of the air-fuel mixture. The electrode 311 of the first ignition plug 31 and the electrode 321 of the second ignition plug 32 are located between the crest 53 of the cavity 50 and the edge of the opening 51 in the front-rear direction of the engine 1.

The first ignition plug 31 ignites or forcibly ignites one vortex flow of the twin vortices in the cavity 50, and the second ignition plug 32 ignites or forcibly ignites the other vortex flow in the cavity 50. In the first operation mode, the ignition timing may be before the compression top dead center. In an embodiment, the ignition timing may be between 60° and -10° before the compression top dead center.

The ignition timing may be between 30° and -10°CA before the compression top dead center, e.g., when the engine load is high. The ignition timing may be between 30° and 60°CA before the compression top dead center, e.g., when the engine load is low.

The ignition timing may be changed in accordance with any one or more of the temperature of the cooling water of the engine 1, the torque (or the load) of the engine 1, the speed (or the rotational speed) of the engine 1. The ignition timing may be advanced as the temperature of the cooling water of the engine 1 becomes lower.

The ignition timing may be advanced as the speed of the engine 1 becomes higher.

The ignition timing may be advanced or retarded as the torque or the load of the engine 1 becomes higher.

The ignition timing may be advanced with increasing the EGR rate.

As schematically illustrated in the top view of FIG. 9, a discharge path between the electrodes 311, 321 of the ignition plugs 31, 32 is extended due to the flow of the air-fuel mixture along the ceiling surface 110. The extension of the discharge path increases a heat supply area to the air-fuel mixture.

After the ignition plugs 31, 32 are discharged, the temperature of the air-fuel mixture around the ignition plugs 31, 32 is rapidly increased. An ignition delay from the discharge of the ignition plugs 31, 32 to the ignition of the air-fuel mixture is shortened.

In addition, with the flow of the air-fuel mixture along the ceiling surface 110, the flame that is shaded in FIG. 10 or FIG. 11 is conveyed inward in the cylinder 11, and the heat is thereby dispersed. In this engine 1, due to shortening of the ignition delay, which is caused by the extension of the discharge path, and the conveyance of the ignited air-fuel mixture, the initial laminar combustion velocity S_{L} is increased in the flame propagation combustion after the forcible ignition by the ignition plugs 31, 32.

After the flame becomes large and the laminar combustion shifts to the turbulent combustion, the intense flow of the air-fuel mixture generated by the twin vortices promotes the turbulent combustion. In this engine 1, a turbulent combustion velocity is also increased.

Since the first ignition plug 31 and the second ignition plug 32 are spaced apart from each other in the front-rear direction of the engine 1, the flame that is generated by the ignition or the forcible ignition by the first ignition plug 31 and the flame that is generated by the ignition or the forcible ignition by the second ignition plug 32 propagate independently. An apparent heat generation amount in the cylinder 11 is doubled until the two flames collide with each other.

In this way, the engine 1 can promote the flame propagation combustion. The large amount of the EGR gas is introduced into the cylinder 11. Thus, even when the air-fuel mixture is significantly diluted, the engine 1 can ensure high combustion stability.

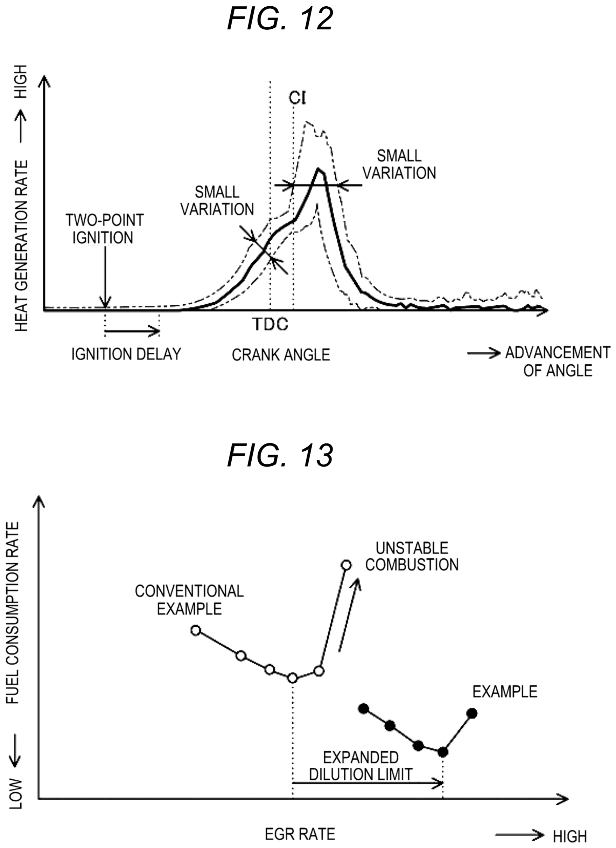

FIG. 12 illustrates a change in a heat generation rate in the cylinder 11 with respect to advancement of a crank angle in a case where the engine 1 is operated in the first operation mode. The change in the heat generation rate can be calculated on the basis of the signal from the in-cylinder pressure sensor 46. In FIG. 12, a two-dot chain line indicates a width of a variation in the heat generation rate when the combustion occurs a number of times, and a solid line indicates an average of the heat generation rate.

Since the SPCCI combustion is performed in the first operation mode, during the compression stroke, the two-point ignition is performed by the first ignition plug 31 and the second ignition plug 32. Then after a predetermined ignition delay, the SI combustion is initiated. The heat generation rate gradually increases with progress of the SI combustion.

In the cylinder 11 during the expansion stroke after the compression top dead center, the unburned air-fuel mixture undergoes the compressed self-ignition, and the compression ignition (CI) combustion is initiated. After the initiation of the CI combustion, both the CI combustion and the SI combustion proceed.

A combustion period of the CI combustion is shorter than that of the SI combustion. Thus, the SPCCI combustion is terminated at an early timing when compared to a case only with the SI combustion.

As described above, the engine 1 promotes the SI combustion by the combination of the formation of the twin vortices and the two-point ignition. Before the initiation of the CI combustion, the variation in the heat generation rate per combustion is reduced. That is, the SI combustion is stabilized. Since the stabilization of the SI combustion reduces the heat variation inside the cylinder 11, a variation in initiation timing of the CI combustion is also reduced. The stabilization of the SI combustion also stabilizes the CI combustion.

FIG. 13 illustrates a relationship between the EGR rate and a fuel consumption rate. The fuel consumption rate is a ratio of the consumed fuel to mechanical energy generated by the engine 1. As the fuel consumption rate is reduced, the fuel consumption performance of the engine 1 is improved.

FIG. 13 is a graph that compares a conventional example (see white circles) and an example (see black circles). As illustrated in FIGs. 4 to 8 and FIGs. 10 to 11, the example is an example in which the twin vortices are formed in the cylinder 11 and the air-fuel mixture is forcibly ignited by the two-point ignition to perform the SPCCI combustion. The conventional example is an example in which the SPCCI combustion is performed without forming the twin vortices in the cylinder 11 and without performing the two-point ignition.

As indicated by the conventional example, when the EGR rate is increased, the fuel consumption rate is reduced. However, when the EGR rate is increased to a predetermined level, the fuel consumption rate is increased. This is because the combustion becomes unstable due to the high EGR rate. A limit of the EGR rate, that is, a dilution limit in the conventional example is relatively low.

In the example, even when the EGR rate is higher than the dilution limit in the conventional example, combustion stability can be ensured. In the example, the dilution limit can be expanded when compared to the conventional example. The fuel consumption rate of the engine in the example can be made lower than that in the conventional example by increasing the EGR rate to be higher than that in the conventional example.

However, also in the example, when the EGR rate is higher than the predetermined level, combustion stability cannot be ensured, and the fuel consumption rate is increased.

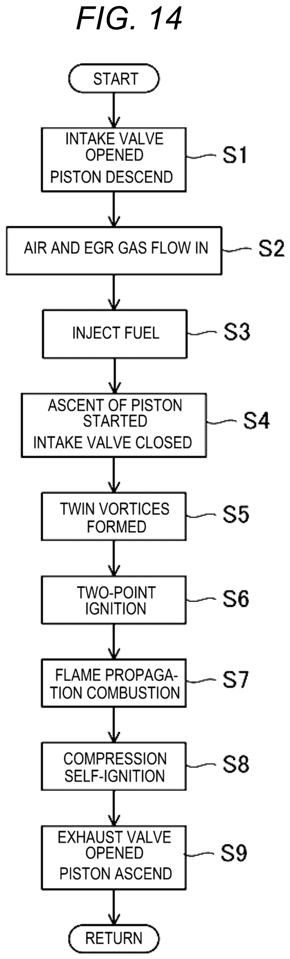

FIG. 14 illustrates a flowchart of a method for operating the engine 1. The flowchart in FIG. 14 is repeated while the engine 1 is operated in the first operation mode.

Steps S1, S2 correspond to the intake stroke. In step S1, the intake valve 21 is opened, and the piston 5 descends. In the following step S2, the air and the EGR gas flow into the cylinder 11 through the intake port 14. The large amount of the EGR gas is introduced into the cylinder 11. In step S3, the injector 30 injects fuel.

Steps S4 to S7 correspond to the compression stroke. In step S4, the piston 5 starts to ascend, and the intake valve 21 is closed. With the ascent of the piston 5, the twin vortices are formed in the cylinder 11 (step S5).

In step S6, the first ignition plug 31 and the second ignition plug 32 ignite the two vortices, respectively. In step S7, the flame propagation combustion is initiated.

Step S8 corresponds to the expansion stroke. After the compression top dead center is passed, the unburned air-fuel mixture undergoes the compressed self-ignition. The SI combustion and the CI combustion proceed in parallel.

Step S9 corresponds to the exhaust stroke. In step S9, the exhaust valve 23 is opened, and the piston 5 ascends. The burned gas in the cylinder 11 is discharged from the inside of the cylinder 11 through the exhaust port 16.

As described above, when the engine 1 is operated in the first operation mode in the operation region 401, the vortex flow of the air-fuel mixture is formed in the cylinder 11, e.g., around the compression top dead center. The vortex flow is the flow that swirls around the axis extending in the intake and/or exhaust direction, and the two thereof are formed in alignment in the front-rear direction of the engine 1 with the center of the cylinder 11 being interposed therebetween.

The engine 1 includes the first ignition plug 31 and the second ignition plug 32, which are spaced apart from each other in the front-rear direction of the engine 1, the first ignition plug 31 corresponds to or is provided for one of the two vortex flows, and the second ignition plug 32 corresponds to or is provided for the other of the two vortex flows.

Each of the two ignition plugs 31, 32 ignites or forcibly ignites the vortex flow of the air-fuel mixture. As a result, as described above, the laminar combustion velocity S_{L} is increased, and the turbulent combustion velocity is also increased. In the operation region 401, even when the large amount of the EGR gas is recirculated into the cylinder 11, the flame propagation combustion is stabilized. In the engine 1, due to the stable flame propagation combustion, compression ignition combustion is also stabilized.

In the operation region 401, the engine 1 can introduce the large amount of the EGR gas into the cylinder 11 and can significantly improve the fuel consumption performance.

The intake port 14 does not have a structure to form the swirl flow and/or the tumble flow in the cylinder 11 but has a structure to cause the intake air to flow into the cylinder 11 from the entire skirt area of the intake valve 21. Thus, the intake port 14 may contribute to form the twin vortices in the cylinder 11. The structure of the intake port 14 is also advantageous for improving the filling efficiency of the engine 1.

The first ignition plug 31 and the second ignition plug 32 are located in the ridgeline portion 111 on the pent-roof shaped ceiling surface 110. Thus, after the forcible ignition by the two ignition plugs 31, 32, the flame easily propagates from the center or the vicinity of the center of the cylinder 11 to each of the intake side and the exhaust side. This is advantageous for promoting the flame propagation combustion of the engine 1.

Since the injector 30 is located between the first ignition plug 31 and the second ignition plug 32 in the ridgeline portion 111, fuel concentration of each of the two vortex flows is equal or substantially equal. The combustion by the two flames proceeds equally with the forcible ignition by the first ignition plug 31 and the second ignition plug 32.

In the front-rear direction of the engine 1, the electrode 311 of the first ignition plug 31 and the electrode 321 of the second ignition plug 32 may be located on the inner side of the cavity 50 from the edge of the opening 51, and are each located between the edge of the opening 51 and the crest 53. The first ignition plug 31 and the second ignition plug 32 can forcibly ignite the two vortex flows formed in the cavity 50, respectively.

For example, the electrode 311 of the first ignition plug 31 and the electrode 321 of the second ignition plug 32 are each located near the edge of the opening 51. The flame that is generated at such a position is promptly conveyed to the inside of the cavity 50 along the ceiling surface 110 of the cylinder 11 by the inward flow from the outside of the cylinder 11. This is advantageous for increasing the laminar combustion velocity S_{L}.

### (Modified Examples)

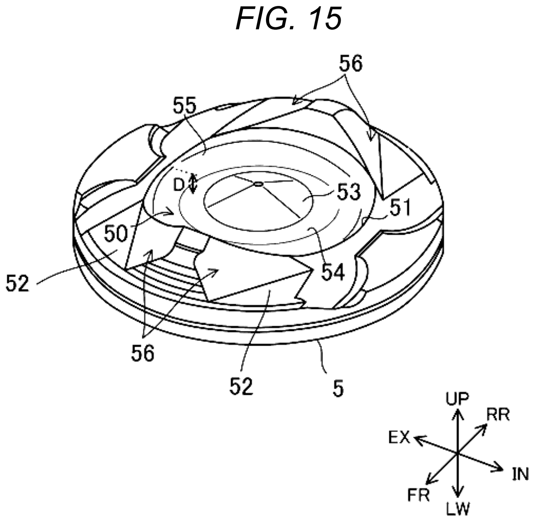

FIG. 15 illustrates a modified example of the shape of the top surface of the piston 5.

As described above, as being directed from the peripheral portion toward the center of the cylinder 11, the squish flow promotes the inward flow from the outside of the cylinder 11 along the ceiling surface 110 of the cylinder 11.

However, in the case where the flow along the ceiling surface 110 of the cylinder 11 is excessively intense, the discharge path of the first ignition plug 31 or the second ignition plug 32 is possibly broken. When the discharge path is broken, the laminar combustion velocity S_{L} is reduced, which possibly makes the combustion unstable.

The piston 5 according to the modified example has a structure to suppress the squish flow. The squish flow is intensified with an increase in a difference between an internal volume of the cavity 50 and an external volume of the cavity 50. Thus, in the piston 5 according to the modified example, a depth D of the cavity 50 is made shallow to reduce the internal volume of the cavity 50.

In the piston 5 according to the modified example, in order to increase the external volume of the cavity 50, a part 56 of a portion that is raised in correspondence with the pent-roof shaped ceiling surface 110 is cut in the squish portion 52 of the outer peripheral portion of the cavity 50.

The external volume of the cavity 50 means a volume of a portion that is formed by the squish portion 52 and the ceiling surface of the cylinder 11 in a state where the piston 5 is at the compression top dead center.

When the squish flow becomes too weak, the inward flow from the outside of the cylinder 11 along the ceiling surface 110 of the cylinder 11 is not promoted, which possibly leads to the reduced laminar combustion velocity S_{L}. When the intensity of the squish flow is adjusted by adjusting the difference between the internal volume of the cavity 50 and the external volume of the cavity 50, the laminar combustion velocity S_{L} can be increased within a range where the discharge path of the first ignition plug 31 or the second ignition plug 32 is not broken.

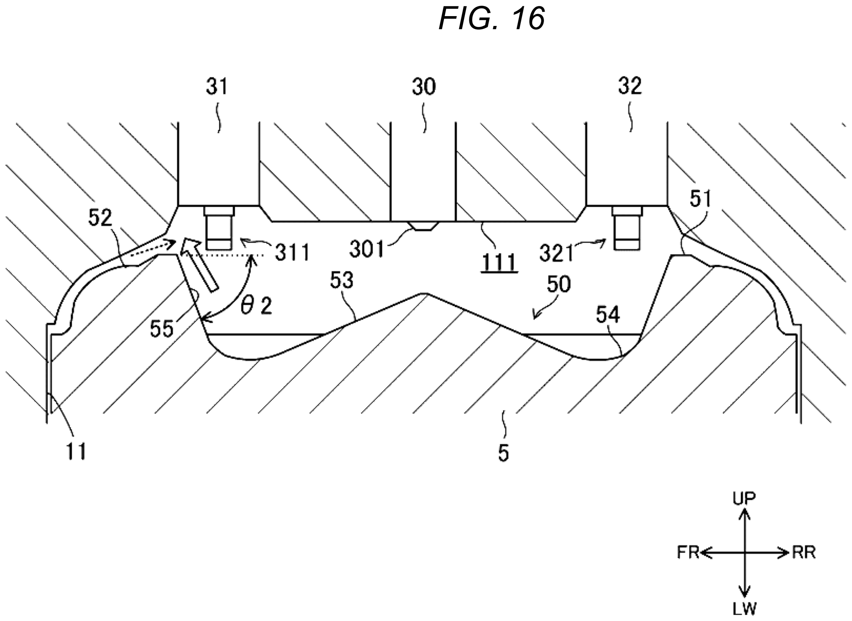

FIG. 16 illustrates a modified example of the shape of the cavity 50 in the piston 5. The modified example in FIG. 16 is an example for adjusting the intensity of the squish flow.

In the piston 5 according to the modified example, the peripheral wall 55 of the cavity 50 is inclined such that the diameter of the cavity 50 is increased from the bottom 54 toward the opening 51 of the cavity 50. For example, an angle θ2 of the peripheral wall 55 with respect to the horizontal direction is less than 90°.

In the cavity 50, as described above, the flow along the bottom 54 from the center of the inside of the cylinder 11 toward the peripheral edge portion thereof is promoted, and such a flow moves along the peripheral wall 55 from the bottom 54 toward the edge of the opening 51. Since the peripheral wall 55 is inclined, as indicated by a white arrow in FIG. 16, the flow that is directed from the edge of the opening 51 to the outside of the cylinder 11 has a component in a direction from the center toward the peripheral edge portion of the cylinder 11. Such a flow interferes with the squish flow (see a broken arrow in FIG. 16) from the peripheral edge portion toward the center of the cylinder 11 and weakens the squish flow.

By adjusting the angle θ2 of the peripheral wall 55, the intensity of the squish flow can be adjusted, and the laminar combustion velocity S_{L} can be increased without breaking the discharge path of the first ignition plug 31 or the second ignition plug 32.

The modified example illustrated in FIG. 15 and the modified example illustrated in FIG. 16 can be combined.

### [Reference Signs List]

1: spark ignition engine
10: engine body
11: cylinder
110: ceiling surface
111: ridgeline portion
14: intake port
141: first intake port
142: second intake port
143: connection portion
144: communication portion
16: exhaust port
18: EGR passage
30: injector
31: first ignition plug
32: second ignition plug
36: EGR valve
5: piston
50: cavity
51: opening
52: squish portion
53: crest
54: bottom
55: peripheral wall
θ1: angle defined by communication portion and connection portion

## Claims

1. A spark ignition engine (1) comprising:
an engine body (10) that has a cylinder (11) extending in a first direction;
a piston (5) that reciprocates in the first direction in the cylinder (11);
an intake port (14, 141, 142) that is configured to communicate with inside of the cylinder (11), and cause intake air to flow into the cylinder (11) when being opened at least in an intake stroke;
an exhaust port (16) that is configured to communicate with the inside of the cylinder (11) in a manner to oppose the intake port (14, 141, 142) in a second direction orthogonal to the first direction, and discharge exhaust gas from the inside of the cylinder (11) when being opened at least in an exhaust stroke; and
a first ignition plug (31) and a second ignition plug (32), each of which is attached to the engine body (10) and configured to ignite or forcibly ignite air-fuel mixture in the cylinder (11) during a compression stroke and/or an expansion stroke, wherein
the first ignition plug (31) and the second ignition plug (32) are spaced apart from each other in a third direction that is orthogonal to the first direction and the second direction,
in the cylinder (11), with ascent of the piston (5) during the compression stroke, the piston (5) is configured to form two vortex flows of the air-fuel mixture, each of which swirls around an axis extending in the second direction and are aligned in the third direction with a center of the cylinder (11) being interposed therebetween, in opposite directions from each other, and
the first ignition plug (31) and the second ignition plug (32) are configured to ignite or forcibly ignite the air-fuel mixture before the compression top dead center.

2. The spark ignition engine (1) according to claim 1, wherein
a tumble flow is not generated in the cylinder (11) by a flow of the intake air that flows into the cylinder (11) through the intake port (14, 141, 142), and/or
the intake port (14, 141, 142) has a connection portion (143) connected to a ceiling surface (110) of the cylinder (11) and a communication portion (144) connected to the connection portion (143) such that an angle (θ1) that is defined by the communication portion (144) and the connection portion (143) when a line of sight is parallel to the third direction is configured to be an angle at which a flow is not separated between the communication portion (144) and the connection portion (143).

3. The spark ignition engine (1) according to any one of the preceding claims, wherein
the intake port (14, 141, 142) includes a first intake port (141) and a second intake port (142) that are aligned in the third direction, and
each of the first intake port (141) and the second intake port (142) is configured to extend in the second direction.

4. The spark ignition engine (1) according to any one of the preceding claims, wherein
a ceiling surface (110) of the cylinder (11) has a pent-roof shape in which each of a connection surface of the intake port (14, 141, 142) and a connection surface of the exhaust port (16) is inclined toward the center of the cylinder (11), and
in a ridgeline portion (111) that extends in the third direction on the pent-roof shaped ceiling surface (110), the first ignition plug (31) and the second ignition plug (32) are located on both sides with the center of the cylinder (11) being interposed therebetween.

5. The spark ignition engine (1) according to claim 4 further comprising
an injector (30) that is configured to inject fuel into the cylinder (11), wherein
in the ridgeline portion (111), the injector (30) is located between the first ignition plug (31) and the second ignition plug (32).

6. The spark ignition engine (1) according to any one of the preceding claims, wherein
the piston (5) has a cavity (50) that is recessed from a top surface, and
the first ignition plug (31) and the second ignition plug (32) are located on an inner side of an edge of an opening of the cavity (50) in the third direction.

7. The spark ignition engine (1) according to claim 6, wherein
the opening of the cavity (50) has a circular shape that is coaxial with a center of the piston (5), and
at a center in the cavity (50), the piston (5) has a crest (53) that is raised in the first direction from a bottom of the cavity (50).

8. The spark ignition engine (1) according to claim 7, wherein
the crest (53) is configured to be raised while an outer diameter of the crest (53) is reduced or gradually reduced from a peripheral portion to the center in the cavity (50).

9. The spark ignition engine (1) according to claim 7 or 8, wherein
on each of both sides of the center of the cylinder (11) in the third direction, the vortex flow of the air-fuel mixture swirls in a direction from outside toward the inside of the cylinder (11) along a ceiling surface (110) of the cylinder (11) and in a direction from the inside toward the outside of the cylinder (11) along the bottom of the cavity (50) opposing the ceiling surface (110), and/or
in the third direction, an electrode (311, 321) of each of the first ignition plug (31) and the second ignition plug (32) is located between the crest (53) and the edge of the cavity (50).

10. The spark ignition engine (1) according to any one of claims 6 to 9, wherein
on the top surface of the piston (5), an outer side of the opening of the cavity (50) is a squish portion (52) that is configured to generate a squish flow in a central direction of the cylinder (11), and
a peripheral wall (55) that is configured to connect the edge of the opening of the cavity (50) and the bottom of the cavity (50) is inclined such that a diameter of the cavity (50) is increased from the bottom toward the opening.

11. The spark ignition engine (1) according to claim 6 further comprising:
an EGR passage (18) through which the exhaust gas discharged from the exhaust port (16) is at least partially recirculated as EGR gas to the intake port (14, 141, 142); and
an EGR valve (36) that is configured to adjust an amount of the EGR gas to be recirculated to the intake port (14, 141, 142), wherein
the injector (30) is configured to inject fuel such that an air-fuel ratio of the air-fuel mixture becomes a stoichiometric air-fuel ratio.

12. The spark ignition engine (1) according to any one of the preceding claims, wherein
the first ignition plug (31) and the second ignition plug (32) are configured to ignite or forcibly ignite the air-fuel mixture during the compression stroke, and/or
the ignited or forcibly ignited air-fuel mixture initiates flame propagation combustion, and after the compression top dead center, unburned air-fuel mixture undergoes compression ignition.

13. A method for operating a spark ignition engine (1), wherein:
in an intake stroke, intake air flows into a cylinder (11) of the spark ignition engine (1) through an intake port (14, 141, 142),
in a compression stroke, with ascent of a piston (5) in a first direction in the cylinder (11), two vortex flows of air-fuel mixture, each of which swirls around an axis extending in a second direction orthogonal to the first direction, are formed in alignment in a third direction orthogonal to the first direction and the second direction with a center of the cylinder (11) being interposed therebetween and in opposite directions from each other in the cylinder (11), and
before the compression top dead center, a first ignition plug (31) and a second ignition plug (32) for the two vortex flows ignite or forcibly ignite the air-fuel mixture.

14. The method according to claim 13, wherein
the first ignition plug (31) and the second ignition plug (32) ignite or forcibly ignite the air-fuel mixture during the compression stroke, and
the ignited or forcibly ignited air-fuel mixture initiates flame propagation combustion, and after the compression top dead center, unburned air-fuel mixture undergoes compression ignition.

15. The method for operating a spark ignition engine (1) according to claim 13 or 14, wherein
exhaust gas that is discharged from an exhaust port (16) is at least partially recirculated to the intake port (14, 141, 142) through an EGR passage (18), and
an injector (30) injects fuel such that an air-fuel ratio of the air-fuel mixture becomes a stoichiometric air-fuel ratio.
